# EUROPEAN PATENT SPECIFICATION

(11) **EP 2 406 198 B1**
(45) Date of publication and mention of the grant of the patent: **03.05.2017**
(21) Application number: 10710648.6
(22) Date of filing: 05.03.2010
(51) Int. Cl.: C04B 18/02, C04B 28/02, C04B 18/16, C02F 11/10

(54) **METHOD AND PLANT FOR TREATING SLUDGES FROM THE MACHINING OF ARTICLES OF AGGLOMERATED STONE MATERIAL**
VERFAHREN UND ANLAGE ZUR BEHANDLUNG VON SCHLÄMMEN AUS DER ZERSPANENDEN BEARBEITUNG VON GEGENSTÄNDEN AUS AGGLOMERIERTEM STEINMATERIAL
PROCÉDÉ ET INSTALLATION DE TRAITEMENT DE BOUES PROVENANT DE L'USINAGE D'ARTICLES EN MATÉRIAU AGGLOMÉRÉ DE PIERRE

(30) Priority: 12.03.2009 IT TV20090039
(43) Date of publication of application: 18.01.2012
(73) Proprietor: Toncelli, Dario, 36061 Bassano del Grappa (VI) (IT)
(72) Inventor: Toncelli, Dario, 36061 Bassano del Grappa (VI) (IT)
(74) Representative: Dragotti, Gianfranco
(86) International application number: PCT/IB2010/050961
(87) International publication number: WO 2010/103445

(56) References cited:
- WO-A1-2007/104368
- WO-A1-2009/033943
- VERESHCHAGIN V I ET AL: "POROUS COMPOSITE MATERIALS BASED ON LIQUID GLASS AND NATURAL SILICATES" GLASS AND CERAMICS, SPRINGER, NEW YORK, NY, US, vol. 59, no. 9/10, 1 September 2002 (2002-09-01), pages 319-321, XP001144060 ISSN: 0361-7610

## Description

The present invention relates to a method and plant for treating the process sludges resulting from the manufacture and machining of stone materials, ceramic materials and agglomerated stone materials, in particular in the case of the latter, those obtained using the so-called Bretonstone technology, to which for the sake of easier illustration reference will be made in the remainder of this description, without being regarded as limited thereto.

The Bretonstone technology in question essentially envisages the preparation of a mix comprising a granulated stone material or the like, with a suitably selected particle size, and a binder consisting of an organic resin which can be hardened, the mix preferably having, added thereto, a very fine inorganic agent, called filler, preferably formed by powdery stone material.

The mix is deposited in the form of a thin layer on a temporary support or used for filling a suitable mould (in the case where a block is to be formed).

Then the mix is subject to a vacuum compression operation and at the same time a vibratory movement at a predetermined frequency.

The rough-formed article thus obtained is transferred so as to undergo a step involving hardening of the binding resin by means of the action of heat and/or a catalyst.

For further details concerning this technology refer, for example, to the patents US 5,928,585, US 6,773,641 and the patent applications US 2006/0,283,136, US 2006/0,119,002 and WO 2006/079,585.

Following manufacture of the slabs, it is then required to perform finishing operations such as sizing and polishing using special abrasive tools operating under a continuous stream of water.

The slabs of stone or ceramic materials are subject to similar operations.

The stream of water is used to cool the tools of the sizing and polishing machines and at the same time eliminate the dust generated by the machining operation. These abrasive tools may be composed of diamond-coated granules which are embedded in a metallic or resinous base.

These operations generate, in terms of waste, a powder consisting of stone material (for example marble, granite, quartz) or ceramic material and any hardened resinous binder as well as any additives, this powder remaining suspended in the abovementioned water stream.

In the case of blocks these undergo firstly a sawing operation which is performed using diamond-coated blades which also operate under a stream of water, with the formation of a similar powdery suspension such as that mentioned above.

This waste water is normally subject to a clarification treatment and remains within the circuit in order to supply the circuits for cooling the sizing, polishing and cutting tools. For this purpose, the machining water, which contains said dispersion powders and to which various substances (e.g. flocculating and anti-foaming agents) are normally added, is treated in separation apparatus or settling tanks so that the powder separates while the water is recycled in order to supply the circuits for cooling the sizing, polishing and cutting tools.

The sludges, accumulated inside the separation or settling devices, are fairly fluid and still have a high water content.

For this reason, during an initial phase of the cycle, the sludges are conveyed into concentration apparatus, such as centrifuges or more often filter presses so that as much water as possible can be extracted.

The water thus extracted is also recycled and used for machining of the slabs of stone, ceramic or agglomerated stone material.

The concentrated sludges, which have a water content varying between 15% and 30% depending on the type of concentration machine, are transferred to refuse collection centres (waste tips) with the consequent problems and costs.

Essentially the machining sludges comprise:
- water used during machining of the slabs;
- ceramic or stone materials and, if the waste is generated by the machining of Bretonstone slabs, powdery resinous binder;
- organic additives, such as flocculating and anti-foam agents which favour settling;
- a minimum and negligible quantity of substances forming part of the machining tools and therefore diamond dust and organic or metallic binder.

The international patent application WO2007/104368 in the name of Management & Innovation describes a method for treatment of sludges resulting from the machining of natural stone.

The aim of the treatment is to recover the water contained in the sludges and the heat used for drying thereof.

The Italian patent application TV2007A000149 in the name of the same applicant describes a method for treating and using sludges resulting from the machining of slabs of agglomerated stone material in which the machining sludges, after at least one step for mechanical elimination of the water content preferably by means of a filter press producing a concentrated sludge, undergo the following operations:
(a) drying the concentrated sludge by means of removal of the water contained therein by evaporation;
(b) calcination of the dried sludge, namely heating at a temperature and for a duration sufficient to eliminate by means of combustion all the organic substances, resulting in a powdery inorganic material.
(c) cooling, followed by disintegration, filtration and, where necessary, separation of the resultant powder; and
(d) use of the powder thus obtained as a filler in the manufacture of slabs of agglomerated stone material.

The plant comprises, downstream of the filter press, a drier for removal of the water by means of evaporation, an incinerator for eliminating by means of calcination the organic substances contained in the dried sludges, with a post-combustion facility.

The plant also comprises:
- a device for breaking up and a device for filtering the residual powders resulting from incineration;
- means for recovery of the water obtained both from preliminary treatment of the sludges and from drying of the concentrated sludge and
- means for transferring said water to a line for machining the slabs of agglomerated stone material in order to supply the cooling circuit thereof.

The particle size of powdery stone material thus obtained depends, not only on the nature of the material itself, but also the material grain of the tools used during the cutting and sizing/polishing operations.

However, even using this method, it is not possible to eliminate entirely the need to use a refuse collection centre, on account of the powders produced.

The object of the present invention is therefore to improve further the abovementioned technology and in particular to provide a method and a plant which allows an efficient use of the machining sludges from a manufacturing and cost-related point of view, resulting in materials useful for other uses.

A second task of the present invention is to provide a method and a plant which allow the products resulting from the treatment of sludges, should they not be reutilized, to be disposed of in an ordinary waste disposal tip for aggregate material.

The object and tasks of the present invention are achieved with a method and a plant as defined in the claims.

The further advantages and characteristic features of the present invention will become clear from the detailed description which follows of a number of examples of embodiment, provided by way of a non-limiting example, with reference to the accompanying drawing which illustrates in schematic form the sequence of treatment steps and therefore also the corresponding plant diagram::
According to the method of the invention sludges comprising the waste from the machining of slabs or blocks of stone, ceramic or agglomerated stone material are used, these sludges being subject to at least one step for mechanical elimination of the water content, with formation of a concentrated sludge.

The steps of the method according to the invention also comprise:
(a) mixing the concentrated sludge with an inorganic binder in an aqueous solution;
(b) reducing the mixture thus obtained into granules with a size normally less than 5 mm;
(c) drying the granular mix by means of evaporation of the water contained in said mixture;
(d) heating the dried granules to a given temperature and keeping them at said temperature so as to render the binder insoluble, with elimination of the organic substances by means of combustion.

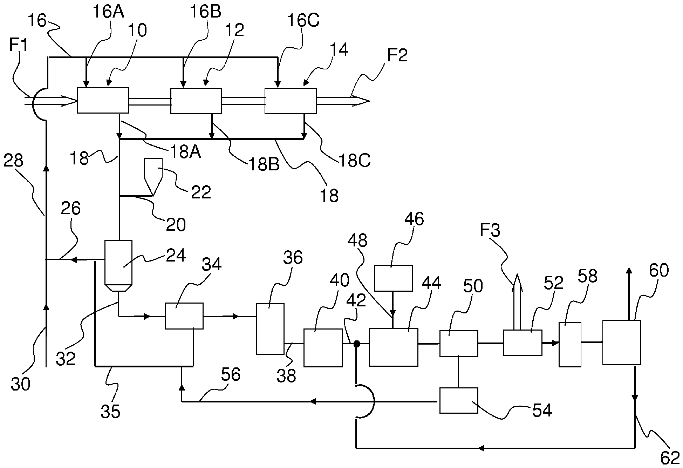

In Figure 1 the arrow F1 denotes rough-formed slabs at the inlet of plant, while the arrow F2 denotes finished slabs leaving the plant. If the slabs are obtained by means of sawing of blocks, known sawing frames (not shown in the figures) for sawing the blocks into slabs are provided upstream of the abovementioned machines.

In the diagram shown in the figure, the reference number 10 denotes a sizing machine for sizing the rough-formed slabs at the inlet, the reference number 12 denotes a polishing machine, and the reference number 14 denotes a cutting machine.

The reference number 16 denotes a header for supplying the cooling water to the abovementioned machines via the branch lines 16A, 16B and 16C.

The machining water, which has the composition described further above and is supplied by the machines 10, 12 and 14, is conveyed into a receiving header 18 via branch lines 18A, 18B and 18C.

A pipe 20 for supplying any suitable settling additives, for example flocculating and anti-foam agents, which are drawn from a tank 22, is connected to the header 18.

The header 18 leads into a settling tank 24 from where the supernatant water is drawn off by means of the pipe 26 and is recycled via the pipe 28 to the header 16 situated in a position upstream of the machines 10, 12 and 14.

If necessary, replenishing water is supplied via a pipe 30.

In this way the water extracted from the sludges can be used along the same slab processing line.

The sludges discharged from the settling tank 24 are transferred by means of a pipe 32 to a concentrator 34, for example a filter press of the conventional and well-known type, having the function of further extracting water form the sludges so as that the latter are concentrated.

The water recovered in this way is conveyed via a pipe 35 to the pipe 26.

The concentrated sludges discharged by the concentrator 34 are collected in a standing tank 36 from where, via a pipe 38, they are conveyed into a pre-drier 40. The function of the pre-drier 40, which is of the conventional and well-known type, is to reduce the moisture in the sludges produced by the concentrator 34 to a value less than about 16%.

A pipe 42 connects the pre-drier 40 to a granulator 44 for granulation of the sludges.

The granulator 44 consists essentially of a mixing machine into which the sludge to be treated is introduced via the pipe 42, together with an inorganic binder, via a metering device 46 connected to the granulator by means of the pipe 48.

The inorganic binder is an aqueous solution, for example a silicate of an alkaline metal such as sodium or potassium.

The reason why a pre-drier is used for preparing the sludges for the granulation step is therefore clear.

In fact, since the aforementioned liquid binder results in an increase in the water content of the sludges, introducing the sludges into the granulator 44 without using a pre-drier 40 would result in the mixture being too fluid for the granulation step.

During the mixing step described above it is possible to add clayey material or zinc oxide, these having the function of making the binder completely insoluble after the subsequent baking step.

The granules thus obtained, which have a size of a few millimetres, are transferred to a drier 50 inside which evaporation of the water contained in the granulate is performed, followed by transfer of the latter into a baking oven 52 operating at a temperature sufficient to ensure insolubilization of the binder and elimination by means of combustion of all the organic substances contained in the sludges. The temperature of the baking oven 52 may range between 400°C and 650°C and the granules remain inside it for a duration such as to ensure the aforementioned complete insolubilization and combustion of the organic substances (for example in the region of at least 10 minutes).

Preferably, the temperature of the baking oven 52 is between 550°C and 600°C.

Both the drier 50 and the baking over 52 are well-known apparatus.

It is also envisaged that the drier 50 and the baking oven 52 may form a single incineration apparatus which performs both functions.

The water removed by means of evaporation during the drying step may be condensed inside the condenser 54 and recycled together with the water recycled from the settling tank via the pipe 56.

The fumes from the baking oven 52 are conveyed to a post-combustion unit 58, operating normally at temperatures suitable for ensuring that the fumes do not contain toxic substances (in particular dioxin), said unit therefore being made to operate at temperatures of between 650°C and 850°C.

The fumes from the post-combustion unit 58 are then transferred to a filter 60 which retains any powder contained in the said fumes which is conveyed back via a pipe 62 to the granulator 44.

The granulate output from the baking oven 52 (arrow F3) has a low apparent specific weight of about 1.1-1.3 Kg/dm³ and is devoid of organic substances.

In an alternative embodiment the granulation and drying operation may be performed in a single apparatus, such as the so-called "spray-dry" apparatus.

Said apparatus is provided with means for spraying the mixture, which comprises sludge and binder, together with any added clayey material or zinc oxide, thus generating droplets of mixture, within a high-temperature air stream which removes most of the moisture present, forming the granules which in this case have a size of normally smaller than 1 mm.

In this embodiment of the invention it is no longer necessary to use a pre-drier since spraying requires a mixture of sludge and binder which is fairly fluid.

The advantage achieved by means of the present invention is that of obtaining a finished product consisting of granules which are devoid of organic components, suitable for many uses in the building industry, for example being able to be used in the production of lightweight concretes or the manufacture of filling materials. The granules may also be used for the manufacture of agglomerated stone products.

A further advantage of the present invention is that the granulate obtained, in the case of an excessive amount being produced, may be disposed of extremely easily in a waste tip for aggregate material since it is not in powder form and does not contain organic materials.

A process devoid of machining waste is thus provided, therefore eliminating the problem and the cost associated with the disposal of waste containing organic components in special waste tips.

The process for manufacturing the agglomerated stone material, in particular Bretonstone slabs and blocks, is therefore a process which respects to a greater degree the environment, in particular if the resin used is of vegetable origin as described in the patent application PCT/IB2007/051949.

It is very important to point out that the resin contained in the agglomerated stone sludges, during the process, acts as a fuel, so that the energy balance is practically equal to zero. In other words, the heat produced by the combustion of the resin contained in the sludges is nearly sufficient to ensure evaporation of all the water and heating of the dry residue up to about 450-600° C.

The gases generated during calcination and subsequent post-combustion may also pass through a heat exchanger so as to recover the heat contained in them, and the latter used to pre-heat the air required for the drying step. The energy requirement for this treatment step is therefore substantially limited.

The invention has been described with reference to preferred embodiments, but it is understood that conceptually equivalent modifications and variations are possible and may be applied.

For example, in order to form granules, the concentrated sludge to which inorganic binder has been added may be converted into granules by means of a known pelletization process.

## Claims

1. Method for treating and using sludges comprising waste from the machining of slabs or blocks of stone, ceramic or agglomerated stone material, in which the machining sludges undergo at least one step for mechanical elimination of the water content with formation of a concentrated sludge,
**characterized in that** it comprises the steps of:
(a) mixing the concentrated sludge with an inorganic binder in an aqueous solution;
(b) reducing the mixture thus obtained into granules;
(c) drying the granular mixture by means of evaporation of the water content;
(d) heating and keeping the dried granules at a temperature sufficient to render the inorganic binder insoluble and eliminate, by means of combustion, any organic substances contained in the granules.

2. Method according to Claim 1, **characterized in that** said inorganic binder is an aqueous solution of a silicate of an alkaline metal such as sodium or potassium.

3. Method according to any one of the preceding claims, **characterized in** it comprises a pre-drying step prior to the step (a) for mixing the concentrated sludge with an inorganic binder in an aqueous solution.

4. Method according to any one of the preceding claims, **characterized in that** the step (b) for reducing the mixture into granules and the drying step (c) are performed in the same apparatus by spraying the mixture of sludge and inorganic binder in a high-temperature air stream.

5. Method according to any one of Claims 1 to 4, **characterized in that** clayey material and/or zinc oxide is added during the mixing step (a).

6. Method according to any one of the preceding claims, **characterized in that** said step (d) for heating the dried sludge is performed at a temperature of between 400°C and 650°C and for a duration of at least 10 minutes.

7. Method according to any one of the preceding claims, **characterized in that** the powders contained in the fumes produced during the heating step (d) are recovered and conveyed back into the granulation step.

8. Method according to any one of the preceding claims, **characterized in that** the granules obtained have a diameter of less than 5 mm.

9. Method according to any one of the preceding claims, **characterized in that** the water recovered during the sludge treatment process is recycled back into the machining of the slabs or blocks of stone material or agglomerated stone material.

10. Method according to any one of the preceding claims, **characterized in that** said granules are used as a filler for the production of slabs or blocks and/or for concretes in the building industry.

11. Plant for treating sludges comprising the waste from the machining of slabs or blocks of stone, ceramic or agglomerated stone material, according to the method of claims 1-10, comprising a settling tank (24) and a concentrator (34) for obtaining concentrated sludges, **characterized in that**, downstream of said concentrator (34), it comprises a granulator (44) for reducing into granules a mixture formed by said concentrated sludge and by an inorganic binder in an aqueous solution; a drier (50) for drying the granules; and a baking oven (52) designed to heat and keep the dried granules at a temperature sufficient to render the inorganic binder insoluble and eliminate, by means of combustion, the organic substances contained in the granules.

12. Plant according to the preceding claim, **characterized in that** it comprises, upstream of said granulator (44), a pre-drier (40) designed to reduce the moisture of the sludges entering the granulator (44) to a value of less than 16%.

13. Plant according to either one of Claims 11 or 12, **characterized in that** said granulator (44) and said drier (50) are replaced by a single apparatus comprising means for spraying the mixture of sludge and inorganic binder in a high-temperature air stream.

14. Plant according to any one of Claims 12 to 13, **characterized in that** it comprises at least one of the following devices:
- a post-combustion unit (58), downstream of said baking oven (52), operating at temperatures designed to ensure that the fumes produced by the baking oven (52) do not contain toxic substances such as dioxin and therefore at a temperature in the region of 650-850°C;
- a filter (60) for the powders produced by said baking oven (52);
- means for collecting the water obtained from said settling tank (24), said concentrator (34) and said drier (50), and pipes (26, 28, 35, 56) for transferring said water to the machining of slabs or blocks of stone, ceramic or agglomerated stone material.

## Patentansprüche

1. Verfahren zum Behandeln und Verwenden von Schlämmen, die Abfall von der Bearbeitung von Platten oder Blöcken aus Stein, Keramik oder agglomeriertem Steinmaterial umfassen, in dem die Bearbeitungsschlämme zumindest einem Schritt zur mechanischen Entfernung des Wassergehalts unter Bildung eines konzentrierten Schlamms unterzogen werden,
**dadurch gekennzeichnet, dass** es folgende Schritte umfasst:
(a) Mischen des konzentrierten Schlamms mit einem anorganischen Binder in einer wässrigen Lösung;
(b) Reduzieren der so erhaltenen Mischung zu Körnchen;
(c) Trocknen der körnigen Mischung mittels Verdampfung des Wassergehalts;
(d) Heizen und Halten der getrockneten Körnchen bei einer Temperatur, die ausreichend ist, den anorganischen Binder unlöslich zu machen und mittels Verbrennung alle in den Körnchen enthaltenen organischen Substanzen zu entfernen.

2. Verfahren gemäß Anspruch 1, **dadurch gekennzeichnet, dass** der anorganische Binder eine wässrige Lösung eines Silicats eines Alkalimetalls wie Natrium oder Kalium ist.

3. Verfahren gemäß einem der vorstehenden Ansprüche, **dadurch gekennzeichnet, dass** es einen Vortrocknungsschritt vor dem Schritt (a) zum Mischen des konzentrierten Schlamms mit einem anorganischen Binder in einer wässrigen Lösung umfasst.

4. Verfahren gemäß einem der vorstehenden Ansprüche, **dadurch gekennzeichnet, dass** der Schritt (b) zum Reduzieren der Mischung zu Körnchen und der Trocknungsschritt (c) in derselben Vorrichtung durch Sprühen der Mischung von Schlamm und anorganischem Binder in einen Hochtemperaturluftstrom durchgeführt werden.

5. Verfahren gemäß einem der Ansprüche 1 bis 4, **dadurch gekennzeichnet, dass** tonhaltiges Material und/oder Zinkoxid während des Mischungsschritts (a) zugefügt wird.

6. Verfahren gemäß einem der vorstehenden Ansprüche, **dadurch gekennzeichnet, dass** der Schritt (d) zum Heizen des getrockneten Schlamms bei einer Temperatur zwischen 400°C und 650°C und für eine Dauer vom zumindest 10 Minuten durchgeführt wird.

7. Verfahren gemäß einem der vorstehenden Ansprüche, **dadurch gekennzeichnet, dass** die in den während des Heizschritts (d) erzeugten Dämpfen enthaltenen Pulver rückgewonnen und in den Granulierungsschritt zurückgefördert werden.

8. Verfahren gemäß einem der vorstehenden Ansprüche, **dadurch gekennzeichnet, dass** die erhaltenen Körnchen einen Durchmesser von weniger als 5 mm haben.

9. Verfahren gemäß einem der vorstehenden Ansprüche, **dadurch gekennzeichnet, dass** das während des Schlammbehandlungsprozesses rückgewonnene Wasser in die Bearbeitung der Platten oder Blöcke aus Steinmaterial oder agglomeriertem Steinmaterial zurückgeführt wird.

10. Verfahren gemäß einem der vorstehenden Ansprüche, **dadurch gekennzeichnet, dass** die Körnchen als Füller für die Herstellung von Platten oder Blöcken und/oder für Beton in der Bauindustrie verwendet werden.

11. Anlage zum Behandeln von Schlämmen, die den Abfall von der Bearbeitung von Platten oder Blöcken aus Stein, Keramik oder agglomeriertem Steinmaterial umfassen, gemäß dem Verfahren der Ansprüche 1-10, umfassend einen Absetztank (24) und einen Konzentrator (34) zum Erhalten konzentrierter Schlämme, **dadurch gekennzeichnet, dass** sie nach dem Konzentrator (34) nachgeschaltet eine Granuliervorrichtung (44) zum Reduzieren einer von dem konzentrierten Schlamm und einem anorganischen Binder in wässriger Lösung gebildeten Mischung zu Körnchen; einen Trockner (50) zum Trocknen der Körnchen; und einen Ausheizofen (52), der ausgebildet ist, die getrockneten Körnchen zu heizen und sie bei einer Temperatur zu halten, die ausreichend ist, den anorganischen Binder unlöslich zu machen und mittels Verbrennung die in den Körnchen enthaltenen organischen Substanzen zu entfernen, umfasst.

12. Anlage gemäß vorstehendem Anspruch, **dadurch gekennzeichnet, dass** sie vorgeschaltet vor der Granuliervorrichtung (44) einen Vortrockner (40), der ausgebildet ist, die Feuchtigkeit der in die Granuliervorrichtung (44) gelangenden Schlämme auf einen Wert von weniger als 16% zu reduzieren, umfasst.

13. Anlage gemäß einem der Ansprüche 11 oder 12, **dadurch gekennzeichnet, dass** die Granuliervorrichtung (44) und der Trockner (50) durch eine einzige Vorrichtung ersetzt sind, welche Mittel zum Sprühen der Mischung aus Schlamm und anorganischem Binder in einen Hochtemperaturluftstrom umfasst.

14. Anlage gemäß einem der Ansprüche 12 bis 13, **dadurch gekennzeichnet, dass** sie zumindest eine der folgenden Vorrichtungen umfasst:
- eine Nachverbrennungseinheit (58), die dem Ausheizofen (52) nachgeschaltet ist und bei Temperaturen arbeitet, die ausgelegt sind, sicherzustellen, dass die vom Ausheizofen (52) erzeugten Dämpfe keine toxischen Substanzen wie etwa Dioxin enthalten und daher bei einer Temperatur im Bereich von 650-850°C arbeitet;
- ein Filter (60) für die vom Ausheizofen (52) hergestellten Pulver;
- Mittel zum Sammeln des vom Absetztank (24), Konzentrator (34) und Trockner (50) erhaltenen Wassers und Rohre (26, 28, 35, 56) zum Leiten des Wassers zur Bearbeitung von Platten oder Blöcken aus Stein, Keramik oder agglomeriertem Steinmaterial.

## Revendications

1. Procédé de traitement et d'utilisation de boues comprenant des déchets provenant de l'usinage de dalles ou de blocs de pierre, de céramique ou de matériau aggloméré de pierre, dans lequel les boues d'usinage subissent au moins une étape d'élimination mécanique de la teneur en eau avec formation d'une boue concentrée,
**caractérisé en ce qu'**il comprend les étapes suivantes :
(a) le mélange de la boue concentrée avec un liant inorganique dans une solution aqueuse ;
(b) la réduction du mélange ainsi obtenu en granulés ;
(c) le séchage du mélange granuleux par évaporation de la teneur en eau ;
(d) le chauffage et le maintien des granulés séchés à une température suffisante pour rendre le liant inorganique insoluble et éliminer, par combustion, toutes les substances organiques contenues dans les granulés.

2. Procédé selon la revendication 1, **caractérisé en ce que** ledit liant inorganique est une solution aqueuse d'un silicate et d'un métal alcalin tel que du sodium ou du potassium.

3. Procédé selon l'une quelconque des revendications précédentes, **caractérisé en ce qu'**il comprend une étape de pré-séchage avant l'étape (a) de mélange de la boue concentrée avec un liant inorganique dans une solution aqueuse.

4. Procédé selon l'une quelconque des revendications précédentes, **caractérisé en ce que** l'étape (b) de réduction du mélange en granulés et l'étape de séchage (c) sont réalisées dans le même appareil par pulvérisation du mélange de boue et de liant inorganique dans un courant d'air à température élevée.

5. Procédé selon l'une quelconque des revendications 1 à 4, **caractérisé en ce qu'**un matériau argileux et/ou de l'oxyde de zinc est ajouté au cours de l'étape de mélange (a).

6. Procédé selon l'une quelconque des revendications précédentes, **caractérisé en ce que** ladite étape (d) de chauffage de la boue séchée est effectuée à une température comprise entre 400°C et 650°C et pendant une durée d'au moins 10 minutes.

7. Procédé selon l'une quelconque des revendications précédentes, **caractérisé en ce que** les poudres contenues dans les fumées produites au cours de l'étape de chauffage (d) sont récupérées et réacheminées dans l'étape de granulation.

8. Procédé selon l'une quelconque des revendications précédentes, **caractérisé en ce que** les granulés obtenus ont un diamètre inférieur à 5 mm.

9. Procédé selon l'une quelconque des revendications précédentes, **caractérisé en ce que** l'eau récupérée au cours du processus de traitement des boues est à nouveau recyclée dans l'usinage des dalles ou des blocs de matériau de pierre ou matériau aggloméré de pierre.

10. Procédé selon l'une quelconque des revendications précédentes, **caractérisé en ce que** lesdits granulés sont utilisés en tant que charge pour la fabrication de dalles ou de blocs, et/ou pour des bétons dans l'industrie du bâtiment.

11. Installation de traitement de boues comprenant les déchets provenant de l'usinage de dalles ou de blocs de pierre, de céramique ou matériau aggloméré de pierre, selon le procédé des revendications 1 à 10, comprenant un bac de décantation (24) et un concentrateur (34) pour obtenir des boues concentrées, **caractérisée en ce que**, en aval dudit concentrateur (34), elle comprend un granulateur (44) pour réduire en granulés un mélange formé par ladite boue concentrée et par un liant inorganique dans une solution aqueuse ; un sécheur (50) pour sécher les granulés ; et un four de cuisson (52) conçu pour chauffer et maintenir les granulés séchés à une température suffisante pour rendre le liant inorganique insoluble et éliminer, par combustion, les substances organiques contenues dans les granulés.

12. Installation selon la revendication précédente, **caractérisée en ce qu'**elle comprend, en amont dudit granulateur (44), un pré-sécheur (40) conçu pour réduire l'humidité des boues pénétrant dans le granulateur (44) à une valeur inférieure à 16 %.

13. Installation selon l'une des revendications 11 ou 12, **caractérisée en ce que** ledit granulateur (44) et ledit sécheur (50) sont remplacés par un seul appareil comprenant des moyens de pulvérisation du mélange de boue et de liant inorganique dans un courant d'air à température élevée.

14. Installation selon l'une quelconque des revendications 12 à 13, **caractérisée en ce qu'**elle comprend au moins l'un des dispositifs suivants :
- une unité de post-combustion (58), en aval dudit four de cuisson (52), fonctionnant à des températures conçues pour garantir que les fumées produites par le four de cuisson (52) ne contiennent pas de substances toxiques telles que dioxine et par conséquent, à une température de l'ordre de 650 à 850°C ;
- un filtre (60) pour les poudres produites par ledit four de cuisson (52) ;
- des moyens pour collecter l'eau obtenue dudit bac de décantation (24), dudit concentrateur (34) et dudit sécheur (50), et des conduites (26, 28, 35, 56) pour transférer ladite eau vers l'usinage de dalles ou de blocs de pierre, de céramique ou de matériau aggloméré de pierre.
